# EUROPEAN PATENT SPECIFICATION

(11) **EP 0 782 804 B1**
(45) Date of publication and mention of the grant of the patent: **16.06.2004**
(21) Application number: 95932987.1
(22) Date of filing: 12.09.1995
(51) Int. Cl.: H04M 3/42, G06F 9/44

(54) **SIMPLIFIED MULTI-CALL PROCESSING**
VEREINFACHTE MEHRANRUFVERARBEITUNG
TRAITEMENT SIMPLIFE D'APPELS MULTIPLES

(30) Priority: 19.09.1994 SE 9403132
(43) Date of publication of application: 09.07.1997
(73) Proprietor: Telefonaktiebolaget LM Ericsson (publ), 164 83 Stockholm (SE)
(72) Inventor: KILHAGE, Per, Erik, Mikael, S-655 93 Karlstad (SE); KULLSTRÖM, Per, Tomas, S-186 96 Vallentuna (SE); TELLINGER, Jan, Anders, S-165 73 Hässelby (SE)
(74) Representative: Svanfeldt, Hans-Ake
(86) International application number: PCT/SE1995/001029
(87) International publication number: WO 1996/009712

(56) References cited:
- EP-A- 0 470 415
- US-A- 4 754 478

## Description

### TECHNICAL FIELD

The present invention refers to a data structure for call processing and particularly to a data structuring enabling a simple way for multi-call in a traffic controlling process for a telecommunication application.

### BACKGROUND OF THE INVENTION

In a modern telecommunication switching system new telephone applications are develloped all the time. This means that it should be easy to extend the switching system with new applications.

During processing of a call in a telecommunication system a large amount of data needs to be handled or collected. Such call related data differs a lot between calls depending on what kind of services are utilized in the specific call, which protocols are used to communicate with the surrounding networks etc. Data contains information useful for different kinds of users of the telecommunication system. One network/service provider may want to create billing records while another wants to create statistics of different kinds. As the vendor wants to be independent of which data the user wants to use and still be able to add new data together with a new service without having to change already existing software, this call related data record have to be handled in a new efficient way.

There exist a number of possible solutions to handle the call related data. One obvious way is to use a conventional database to collect the information, which quickly renders into capacity problems. Another solution is choose a declarative solution where a declaration of the contents is made (e.g. compare a record in Pascal). The drawback of a declarative solution as a Pascal record is that it does not present the desired flexibility. Yet another approach is to send around the data between the objects whenever it is needed, which creates duplication of data. In the state of the art there are found several concepts regarding object oriented software structures for processing in a modern telecommunication system. EP-0 524 089 A1 titled "Structure de logiciel pour système de traitement de données, notamment pour système de télécommunications" describes a logical structure system for processing data, specifically for telecommunication systems. The structure particularly simplifies the real time communication between the objects according to the CCITT rules X 200. EP-0 524 077 A1 titled "Structure de logiciel pour système de traitement d'informations" describe a structure which hides the hardware and software system features to the application programs.

EP-0 470 415 A2 describes a method to supply a number of application processors in a telephony system access to call related information in a common database. The information is tagged and stored temporarily as a record in the database as long as the communication lasts. The information is particularly directed for being directly viewed on a display terminal for supervision in an operator controlled switching system.

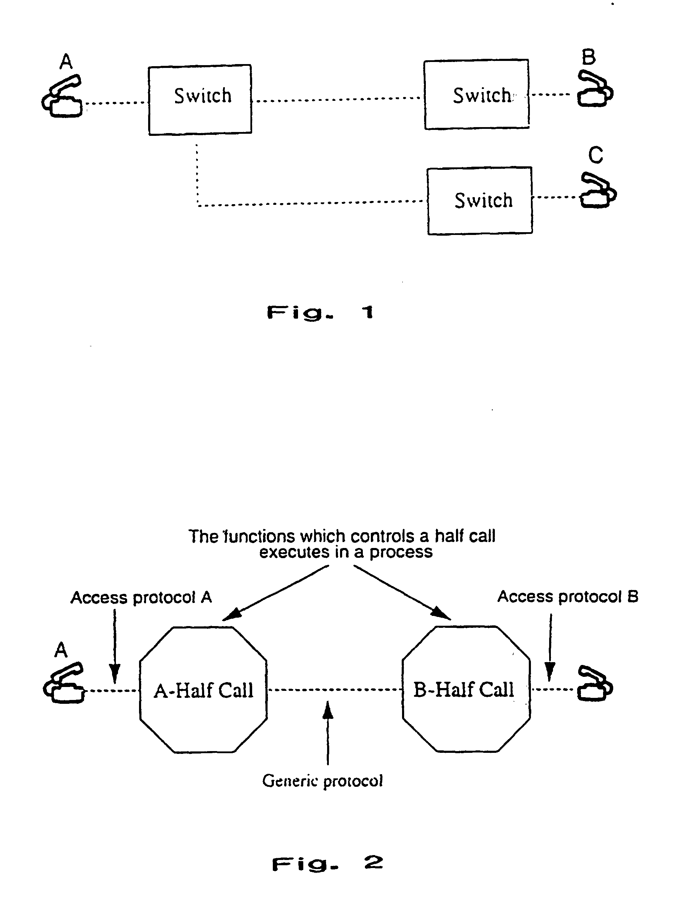

Another problem involves how to efficiently handle a multi-call situation. A multi-call means that a call with more than two subscribers should be able to set up. When a call is made from a subscriber (A) to another subscriber (B) the connection is set up in a normal way. When a third subscriber (C), as indicated in Fig. 1 is calling the first subscriber (A) it should be possible to join the call, i.e. that the first subscriber (A) gets an indication that another call is coming in and can accept or reject this.

### SUMMARY OF THE INVENTION

Therefore there is a demand in a telecommunication system, preferably by way of software and/or hardware, to create a standard and generic structure for multi-calling, which makes it possible to extend said system with new services and data without effecting an already existing operating software of a system using the half-call principle.

A first object according to the present invention in a process, utilizing a half-call principle, comprising a session including a session controler handling the half-call is to create a first entry port to handle the protocol from a dialogue request and simultaneously also create a second entry port to handle a second dialogue request, whereby it is ensured that the second dialogue request being directed to the second entry port incorporated in the session will be able to join an ongoing call if the party having the ongoing call accepts the second dialogue request.

A second object according to the present invention is that the dialogue request will be received by a setup server, which directs the dialogue request to the session.

A third object according to the present invention is that the session uses a memory function in which different records store references in form of pointers to a local memory function, a pointer being combined with a tag element by means of which locally stored data will be uniquely identified.

A fourth object according to the present invention is that the session uses a session record for storing references in form of pointers to executing objects and to data objects of the call and from which record it will be possible to locate all other objects within the session, if tag elements under which objects are stored are known.

A fifth object according to the present invention is that the session comprises a traffic case scope having a similar structure as a session scope, and a traffic case record is referenced from the session record, and the traffic case record is created to store references to executing objects of a call.

A sixth object according to the present invention is that a transaction record stores data objects belonging to a traffic case.

A seventh object according to the present invention is that the tag element is realized by an integer number uniquely assigned to each executing object or data object used.

### BRIEF DESCRIPTION OF THE DRAWINGS

The invention, together with further objects and advantages thereof, may best be understood by making reference to the following description taken together with the accompanying drawings, in which:
- Figure 1: illustrates a general case including a multi-call situation;
- Figure 2: illustrates generally the principle using an A-Half Call and a B-Half Call;
- Figure 3: is an illustration of a session having a session controller, SC, handling several traffic cases including for each traffic case a respective originating call, OC, in communication with other traffic cases including a respective terminating call, TC;
- Figure 4: demonstrates a session controller, SC, using, according to the method and system of the present invention, a session record to store references to executing objects and a transaction record to store references to data objects;
- Figure 5: demonstrates collections according to the method and system of the present invention to store a traffic case object within an originating call, OC;
- Figure 6: is an demonstration of objects controlling the data flow in a session;
- Figure 7: demonstrates an example when data for a charging basis is extracted from a session; .
- Figure 8: shows in a simple example the relation between created managed objects;
- Figure 9: shows the complete static view according to the simple example of Fig. 6;
- Figure 10: illustrates how a static process represented by the setup server starts a dynamic process by means of the session controler as shown in Fig. 4;
- Figure 11: shows the steps for creating a session for a Half Call when the subscriber has no active call;
- Figure 12: demonstrates the steps in line with the step of Fig. 11 according to the present invention to join a session when the party already has an ongoing call; and
- Figure 13: is a summary of a multi-call processing connection including three subscribers according to the present invention.

### FUNDAMENTALS

To be able to handle the subject of the present application in an efficient way it will be practical to first define a number of technical terms which will be useful throughout the following description.

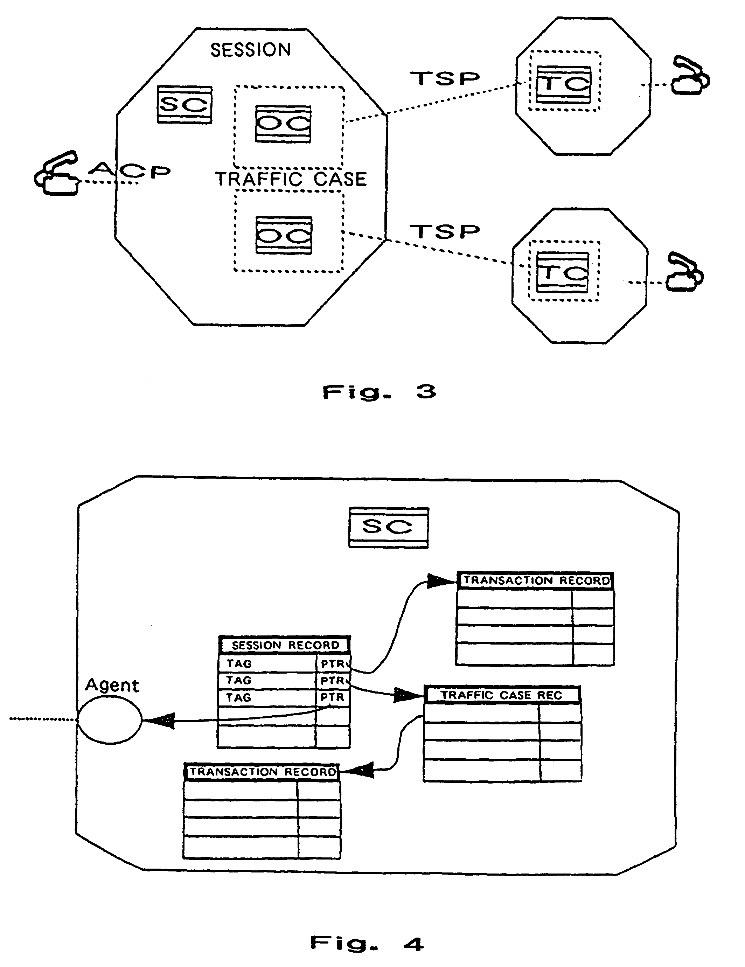

A common way to structure software in a call processing switching system for telephony is to divide the control of the call into two halves, a Half-Call A and a Half-Call B. This is illustrated in Fig. 2. The software which controls a Half-Call is executing in a process called a Session. A session can handle one or several Traffic Cases simultaneously (for example in a multi call situation). The Traffic Case defines the functionality and data that handles a call in a Session. Note also that a three party call is handled by two Traffic Cases in a Session, one for each call leg.

For the sake of simplicity the session is structured in different scopes and therefore is introduced the Session Scope and the Traffic Case Scope. This is illustrated in Fig. 3. The Session Scope is controlled by the Baseflow Session Controller, SC. The main task for the session controller is to act as a command interpreter against the Access Protocol, ACP and make a service analysis on these commands (Messages). This includes then, for instance, initiating and terminating new Traffic Cases, distributing information from the Access Protocol to the correct Traffic Case, initiating new services, etc.

Every Traffic Case within the Session is controlled by one baseflow. Such a baseflow may be either an Originating Call, OC or a Terminating Call, TC. The main task for this baseflow is to take care of the basic call handling. This includes for example establishing/disconnecting a call (including handling of the Telecommunication Service Protocol, TSP, between call halves), ordering establishment/disconnection of connections (for example a speech connection), ordering address information analysis, etc.

To support the different scopes and the control logic operating within those, there is a need of a similar data structure. Thus the data must be structured in a certain way to make it possible to implement and maintain the applications. Correspondingly there exists two different types of objects, which in this description are denoted Executing Objects and Data Objects.

An Executing Object will execute in the session, e. g., control objects, protocol objects, resource objects etc. A pure Data Object will contain data received for example from a Teleservice Protocol Message. It shall also be possible to make an output of this type of data for charging or for statistic purposes. The two types of Objects have different semantics and are stored in different records in the Session. This is illustrated in Fig. 4. One such record is referred to as a Session Record and is used to store pointers to protocol objects and resource objects instantiated by control and resource objects within the Session. The Objects stored in a Session Record are common for the whole Session. For storing references to pure Data Objects is used a Transaction Record. In a similar way as the Session Record stores pointers to objects the Transaction Record (also named call record) is used to store pointers to pure Data Objects instantiated by control, protocol, and resource objects within the Session or a Traffic Case executing in the Session.

A users view of a Session Record is referred to a Session Record View and gives the user an interface to the Session Record on a high abstraction level. Similarly a users view of a Transaction Record is referred to as the Transaction Record View and gives the user an interface to the Transaction Record on a high abstraction level.

Finally there is also found a Traffic Case Record which is a record where pointers to Objects belonging to a Traffic Case are stored. Only pointers to Protocol Objects and Resource Objects are stored in this record. For storing pure Data Objects a Transaction Record should be used. A users view of a Traffic Case Record is referred to a Traffic Case Record View and gives the user an interface to the Session Record on a high abstraction level.

### DETAILED DESCRIPTION OF THE PREFERRED EMBODIMENT

To support the different scopes and corresponding control logic for a call processing in a telecommunication system we need a suitable data structure. Data must be structured to make it possible to implement and maintain the applications. We therefore introduce two different types of objects, the executing objects and data objects, respectively, to keep track in an session. These two terms, which were already defined above, do have different semantics and are stored in different records in the created session. When storing an object in a collection it is only a question of storing a pointer to the object that is to be stored and consequently no duplication of the object itself is made in such a step. This also implies that for such a pointer storage there is actually no need to know the size of the particular object.

Figure 3 is a generalized view of a session scope, which is controlled by the session controller SC. The session controller is acting as a command interpreter against the access protocol ACP, which is the generic term used for the subscriber or network accesses. As is evident from figure 3, the session contains one or several traffic cases, and here the particular session contains two traffic cases which are both of the OC type (originating call). Each one of the two traffic cases of type OC is established by means of the respective traffic case to another traffic case of type TC (terminating call) through a handling telecommunication service protocol, TSP.

As indicated in figure 4 there is in the session scope a session record, which shall be used for storing a pointer, PTR, to each executing object, for example to a so called session agent. The session record, SR, is by means of other pointers the root for the data structure in each session. The data objects of the whole session is found in the transaction record by means of their respective pointers, PTR. Each entry in the session record is having a particular name or key, TAG, which makes it possible to locate any object within the session scope if the particular system operator knows the particular name or TAG.

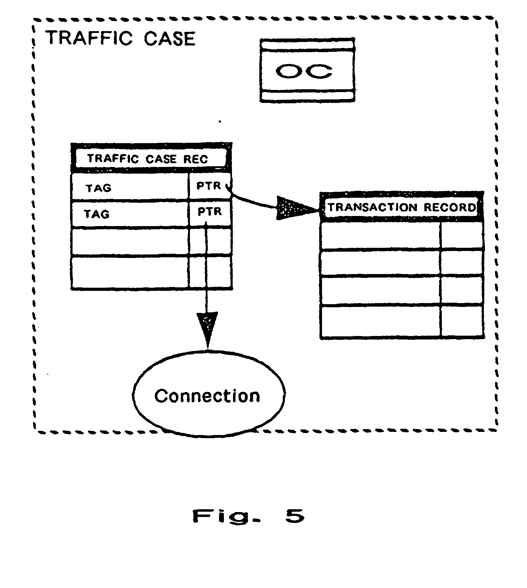

Figure 5 is a generalized view of a traffic case scope, here containing an originating call type, OC, but a terminating call type, TC, would have the corresponding structure. This scope has to be introduced if the application has a need to execute an arbitrary number of parallel traffic cases in the session. The. structure of the traffic case scope is thus similar to that of the session scope. For each traffic case in a session there is created a traffic case record to store executing objects. Like in the session record is used a name or TAG and a pointer PTR. The traffic case record is accordingly referenced from the session record. To store data objects belonging to the traffic case is consequently used a transaction record, TR, creating a table for the data objects at this traffic case level.

Every user of a session or traffic case record has an own view object through which the stored executing objects or data objects may be accessed.

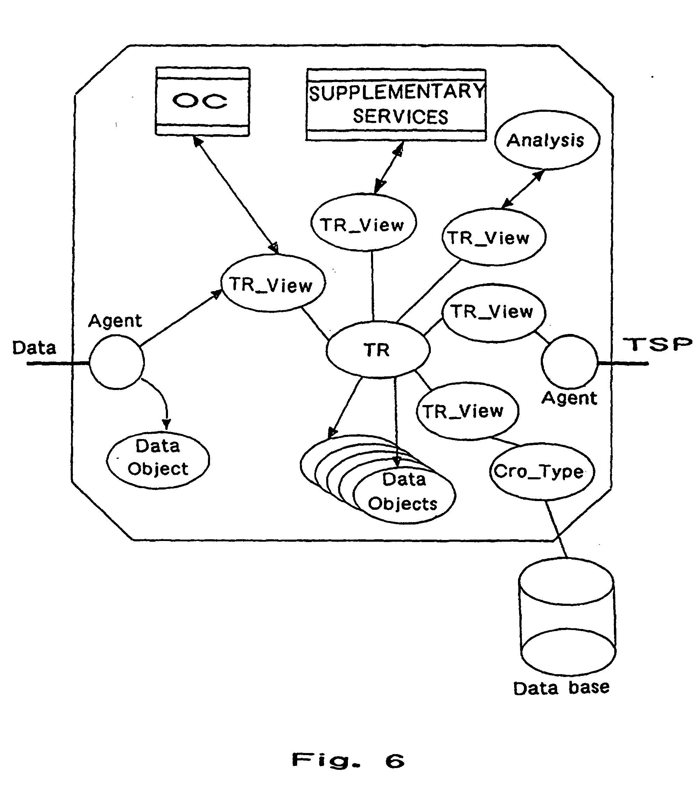

Figure 6 demonstrates in greater detail the data flow through a session executing an originating call, OC. The data flow starts when some data is received by an access agent or the input agent. The received data is converted to an AXE internal representation. The converted data is then stored in the transaction record, TR. The data object is stored with a tag. The tag is an integer that is reserved for this particular data object. Other users, e.g. an Application Analysis, needing the data object can fetch it from the transaction record by means of the tag and by utilizing a transaction record view object, TR_View. The above example also illustrates when data is sent by the output agent to the other Half-Call via the telecommunication service protocol, TSP. Data is sent in a parameter which besides the data contains the tag which identifies it.

As stated above a data object is stored in the transaction record (a synonym for transaction record is also call record). The transaction record, TR, is as already stated always accessed via a view object. The view object gives the user a high level interface to TR, which will be further described below. Each data object that is stored in the transaction record is semantically identified by a name or key referred to as the TAG. The TAG is an integer, in an exemplifying embodiment a 16 bit word, which has been reserved for one particular data object. By using a dynamic storage such as the transaction record, where the data objects are stored with tags it will be possible to support a very flexible output mechanism. In other words it will be extremely easy, without influencing the general operation of the telecommunication system, to at any particular time period extract any chosen data objects on demand of the user for a later analysis. A consequence of this is that it will be extremely easy to add additional services into a system operating according to such a structured way of operation.

Assume that the agent receive the parameter "calling party number" on the protocol, ACP. The data will be converted to an AXE internal representation and stored in the TR together with an dedicated tag, "AppCallingPartyNumberTag". Other users of TR that needs the calling party number can then turn to the TR and ask for the data object that is stored with the TAG "AppCallingPartyNumberTag". An interface Application Platform Tags Interface, ATI, contains the number of tags used by the functions. ATI also contains the rules to follow when new tags are reserved.

As already mentioned the TR is always accessed via a view object. The view object has two main tasks. The first is to present a customized interface towards the TR. Each user of the TR should have a dedicated interface to the contents in the TR. The second task is to act as a handle object towards the TR, the handle ensures that TR is not removed until all handles are deleted.

View objects are also used to access the contents of the other two types of record that exist, the session record and the traffic case record. As mentioned above one task of the view object is to provide the user with a customized interface on a high abstraction level towards a record. The customizing means that the interface gives the users access only to the objects needed to be accessed, which may be only a part of the total contents in a record.

The second major task of the view objects towards the transaction record and the traffic case record is that they act a handles. As long as a record has a handle it can not be deleted. When the last handle towards a record is removed the record and. all its content is also removed from the local memory storage. It is apparent that this creates a very convenient local memory storage management.

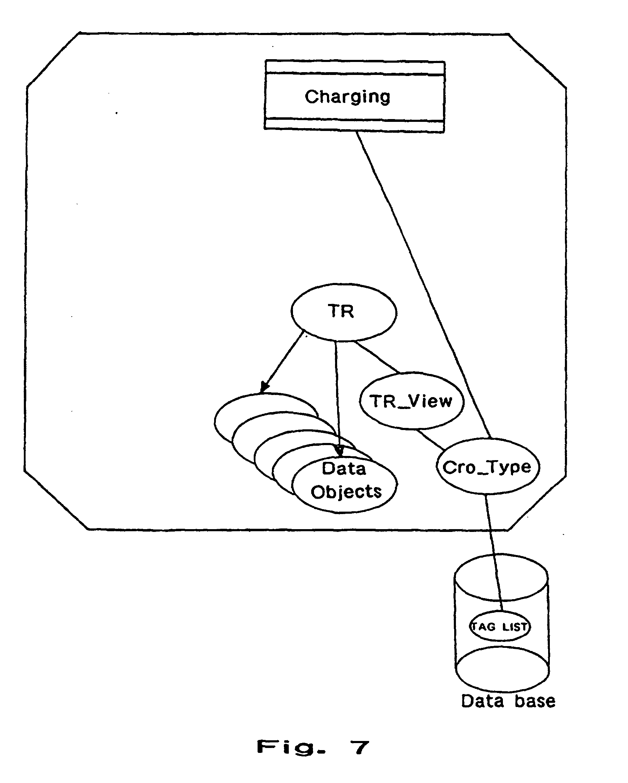

The call record output mechanism already mentioned is used to output parts of the content of a transaction record for post-processing. It should be kept in mind that the contents of the session record and a traffic case record and a transaction record are existent only during the duration of that particular session and will disappear when the session is terminated. The output mechanism is built around a number of managed objects containing tag lists. In the operation of a telecommunication system there is for instance a need to collect charging data to be able to correctly bill the different subscribers. In Figure 7 is exemplified what may take place in a session. A control object "Charging" has opened an object Cro_Type. This particular Cro_Type object contains a Tag list, fetched from the data base, denoting the data objects to be extracted from the transaction record. Cro_Type is then ordered to compile a report consisting of the data objects identified by the tag list which is stored in the data base. The control object then uses the Cro_Type interface to order it to collect the data during the existence of the particular session. The data may be packed in a data area which then will be sent to a post-processing node. Consequently a charging basis due to increased services may be changed at any moment by simple modification of the tag list without interfering at all with the existing system having a structure according to the present invention.

The effective result of this is that even if the contents of the different sessions are defined as local data, it is possible to simultaneously make use of desired parts of the content as if it constitutes global data. A difference between local and global data is for example that the latter by necessity has normally to be allocated in predetermined memory locations to be able to be accessed by other users.

In the illustrative embodiment we use three types of managed objects to effectuate the flexible output mechanism described here. They are denoted as CroServiceTemplate, CroType and CroCustomerTemplate. The first managed object type, the CroServiceTemplate is used for specification of what data objects are possible to extract for a specific basic or supplementary service. CroServiceTemplate contains one attribute, possible TAGs, denoting which data is possible to extract from the transaction record, TR, for a particular service, for example in this context a "Basic Call" or a "Three Party Call".

The second managed object type is CroType, which is used for specification of a certain output type. Every instance of CroType is connected to one or more instances of CroServiceTemplate. The union of data in these CroServiceTemplates determines what data is possible to output for a specific CroType.

The third and last management object type is CroCustomerTemplate, which is a managed object holding the information of which data to extract for a specific customer in a specific output type, CroType.

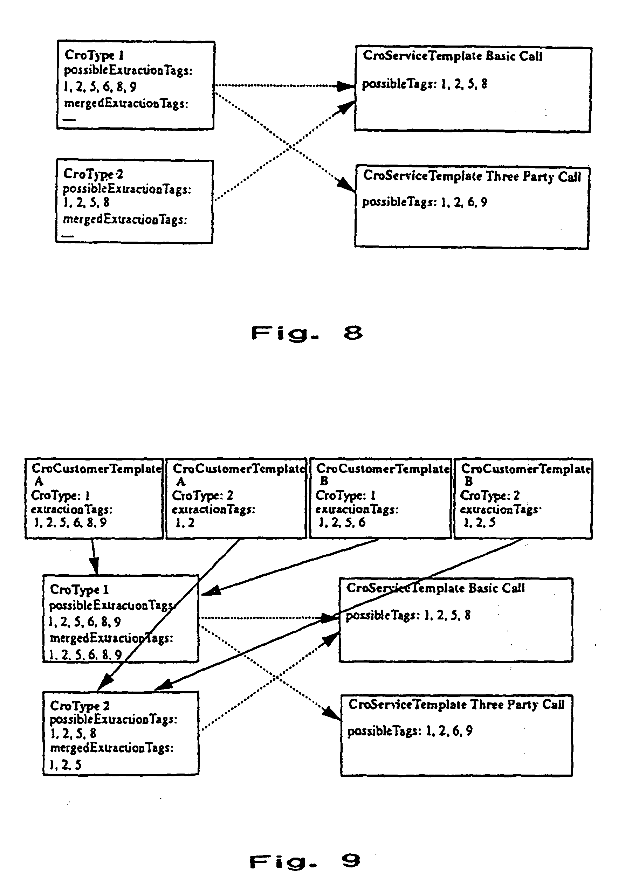

Figure 8 demonstrates a small example having the conditions:
- There are two customers, A and B.
- There are two services, "Basic Call" and "Three Party Call".
- There are two CroTypes, CroType 1 and CroType 2.

Because there are two services we need two CroServiceTemplates:
- CroServiceTemplate Basic Call, containing the Tags 1, 2, 5 and 8.
- CroServiceTemplate Three Party Call, containing the Tags 1, 2, 6 and 9.

This means that for the "Basic Call" we can output the data stored in TR having the Tags 1, 2, 5, and 8, while for the service "Three Party Call" we may output the data stored under the Tags 1, 2, 6, and 9.

We then define two output types, CroType 1 designed such that it will be able to output data related to both services and CroType 2 designed such that it will be able to output data related to the Basic Call. In Figure 8 is visualized the basic structure and the relation between the created managed object.

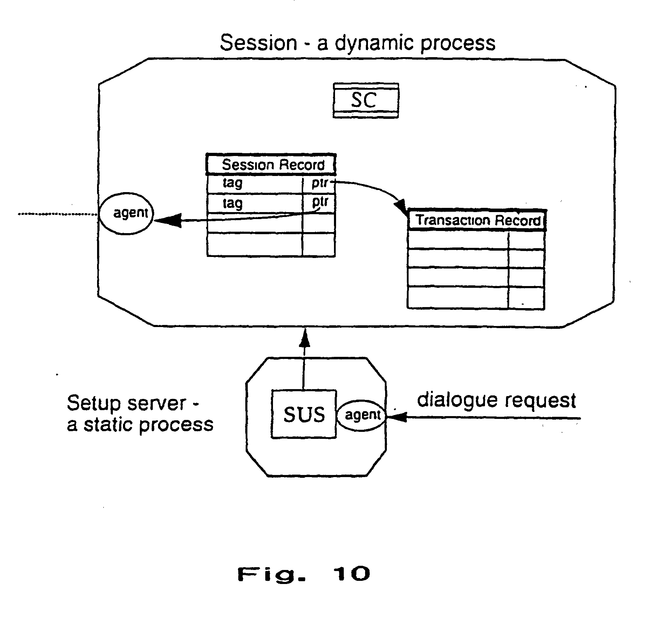

One CroCustomerTemplate is required for each customer and CroType to make the output mechanism "Call Record Output", CRO, able to perform outputs of all CroTypes to all customers. This results in this example in a total of four CroCustomerTemplates. In Figure 9 is demonstrated the resulting structure. Customer A requires all possible Tags from CroType 1 and Tag no. 1 and 2 from CroType 2 and customer B requires all Tags with lower number than 8 from all CroTypes. We then have a final structure that the output mechanism CRO needs to make a proper distribution. We have specified which data fields all different customers need from all different CroTypes.

A final part of the data flow in Figure 6 describes when the data shall be sent to the other Half-Call. The Half-Calls communicate by means of the Telecommunication Service Protocol, TSP. The TSP carries self-identifying parameters. A parameter contains a data object and is identified by a Tag, which in an illustrative embodiment may contain a number of bytes, e.g. 16 binary bits. The receiver can determine what data is received by looking at the Tag. The Tag which is used to identify a parameter on the TSP is the same Tag used to identify a data stored in TR.

As mentioned already one way to structure the software in a call processing switching system for telephony is to divide the controll of the call into two halves. This is referred to as the half-call principle and means that each part of a call is controlled by its own software. By combining this with a suitable generic protocol between these call halves, it is possible to build up a system which is very easy to extend with new telephony applications. This structure is also demonstrated in Fig. 2.

Now will be described a way, for example by means of object oriented programing, in which according to the present invention one of these call-halves can be structured to make it easy to join a call to an already established call, that is a multi-call, which for instance may be a 'Three Party Call' as discussed above.

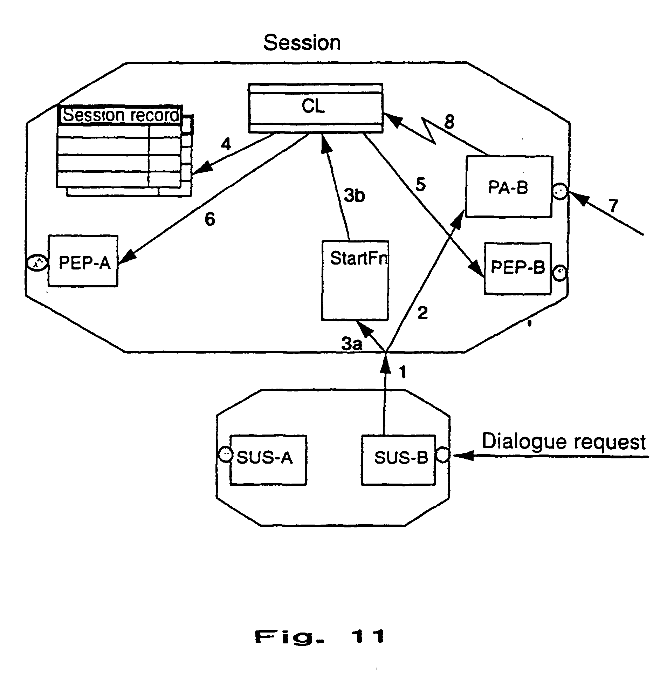

As already described a software and/or hardware that handles an object of one half-call is referred to as a session. The session is a dynamic process that is started up by a setup server (SUS). A session has as already mentioned a master control part called a session controller (SC) and a storage structure called session record (SR). In the session record references to all executing objects and data structures for the session are stored. This is illustrated also in Fig. 10.

When a call is started a setup server (SUS) will receive a dialogue request on it's port agent. The setup server first checks that this request received is valid, i.e., that the destination is right. Then the setup server checks if a new session should be created or if an existing session may be joined (an existing session indicates that the called party already has an active call). Fig. 10 is indicating this situation.

In the case when the called party has no active call the setup server along path 1 in Fig. 11 creates a new dynamic session for the called party. In this example a session protocol agent, PA-B in Fig. 11, is created at 2 to handle the protocol from the dialogue request. Then the control logic CL is started at 3a and 3b to take over the session. The control logic creates a data structure at 4 referred to as the session record, as previously discussed, to store information about the session before starting a protocol entry port at 5, in this case PEP-B to handle the received messages. To make it possible for another later call to join the session the control logic also at 6 starts another protocol entry port PEP-A. The dialogue request will now at 7 be transferred to the protocol agent PA-B which checks it before at 8 tranferring it to the control logic CL. The continuation depends on what the dialogue request contains and how the control logic should handle this and will be apparent for a person skilled in the art.

One important point here is that the object PEP-A, the second entry port is created at this time. If it is not created at this point that must be done at a later stage as there is a risk of getting another request to the same subscriber. At a later time there is apparently a risk that another process by chance will be created parallel to the existing process. In that case it would be complicated to achieve the desired flexibility for joining the ongoing call, if possible at all. Thus the important thing is that the control logic CL by creating two protocol entry ports (PEP-B and PEP-A) enables another call to easily join this ongoing session.

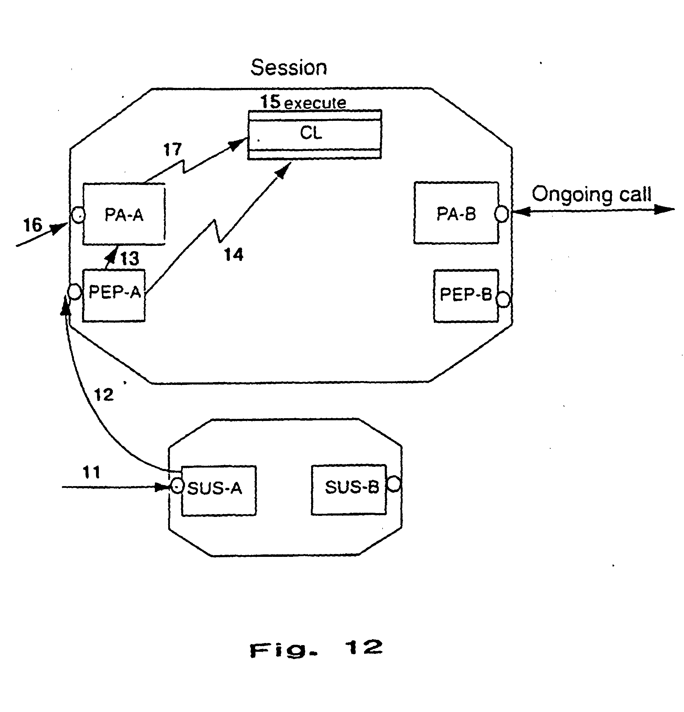

If the called party already has an active call, that is a session for this party already exists, when the setup server get another dialogue request 11 for this party the setup server will discover this and then try to join the existing session as illustrated in Fig. 12. The setup server first checks the database, i.e the session record, for the address to the available protocol entry port PEP-A and then at 12 transfers the dialogue request to this port. The protocol entry port PEP-A then creates a protocol agent PA-A at 13 and sends a message at 14 to the control logic CL that a message is coming on the created protocol agent PA-A. The dialogue request that now has been transferred from the setup server SUS-A to the protocol agent PA-A (at 16) will be sent to the control logic at 17 that starts handling the message. The continuation depends on what the dialogue request contains and how the control logic CL should handle this.

The important thing here is that the setup server SUS-A can reach information on where the protocol entry port PEP-A is. This information is found in the session record SR. The setup servers SUS-A and SUS-B have a common data area, possibly in a, generally local, database, where information about sessions are stored.

If yet another dialogue request is coming to setup server SUS-A for the same party as earlier, which already has two calls active, the setup server will transfer the message to the protocol entry port PEP-A. The protocol entry port PEP-A will then create a new protocol agent (a second PA-A) as described earlier. This new request will NOT be transferred to the existing protocol agent PA-A because there are two different dialogues that should not be mixed. The structure thus described opens up a way to easily extend the session for multi-call service without as a matter of fact interfering with the overhead telecommunication switching system.

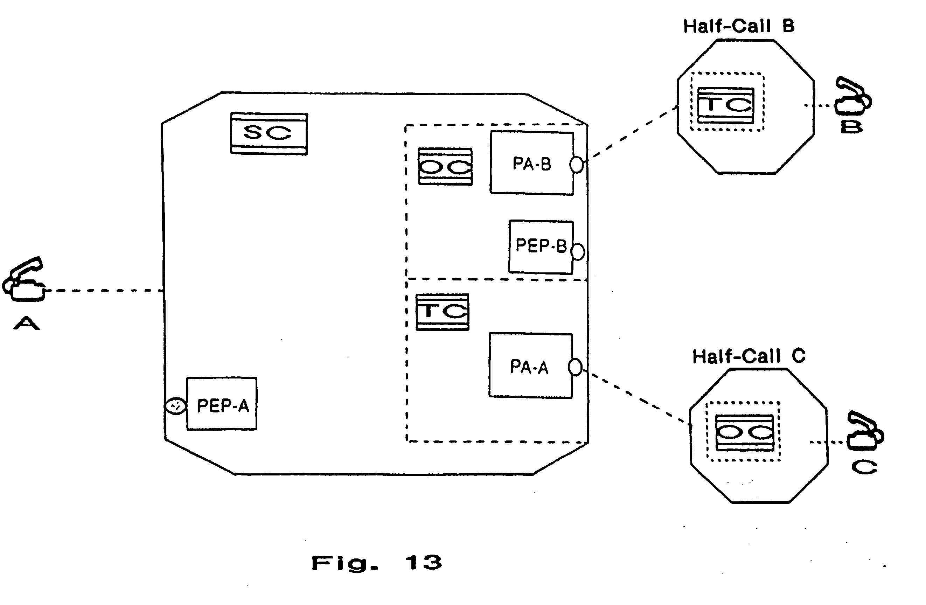

Fig. 13 demonstrates a summary of a multi-call processing case involving three subscribers. PA-A and PA-B here belong to two different traffic cases but are handled by the same session and session controler SC. In one of the traffic cases subscriber B is the terminating call, while in the second traffic case subscriber C is an originating call. Because both these traffic cases are handled by the same session it will be easy for the subscriber A or B to be accessed by subscriber C which for example was trying to call subscriber A or B alredy being busy in a communication.

To summarize, for every new dialogue request that is reeived for a specific party a new protocol agent will be created to handle the dialogue. All executing objects and data objects belonging to the particular session will be defined by its TAG in the session record and a respective pointer PTR will give an adress to the storing location in the memory. The advantages will be:
◇ the disclosed method creates a standard and generic structure, common for all telecommunication applications, which makes it possible to extend with any number of calls to a specific party;
◇ the method creates a structure which is easy to extend with new dialogues (TSP dialogues). This is done without effecting the base functions;
◇ the method creates a structure which means that all handling-of data and interactions for a specific party can be centralized into one dynamic process; and
◇ from the characteristics point of view, performance and memory usage, this means that all coordination and data manipulation can be done in the dynamic process without using any interprocess communication.

It will be understood by those skilled in the art that various modifications and changes may be made to the hardware/software according to the concept of the present invention without departure from the scope thereof, which is defined by the appended claims.

## Claims

1. A method to structure multi-call processing in a telecommunication system, preferably by way of software, creating a standard and generic structure, which makes it possible to extend said system with new services and data without effecting an already existing main operating hardware and software of the system using the half-call principle, **characterized in that** the method comprises a session including a session controler (SC) handling said half-call whereby a first entry port (PEP-B) is created to handle the protocol f rom a dialogue request and simultaneously a second entry port (PEP-A) is also created to handle a second dialogue request, and whereby it is ensured that said second dialogue request being directed to said second entry port incorporated in said session is capable to join an ongoing call if the party having the ongoing call accepts said second dialogue request.

2. The method according to claim 1, **characterized in that** said dialogue request is received by a setup server, which directs the dialogue request to said session.

3. The method according to claim 2, **characterized in that** said session uses a memory function in which different records are storing references in form of pointers to a local memory function, a pointer (PTR) being combined with a tag element (TAG) by means of which locally stored data will be uniquely identified.

4. The method according to claim 3, **characterized in that** said session uses a session record (SR) for storing references in form of pointers to executing objects and to data objects of the call and from which record it will be possible to locate all other objects within the session, if tag elements (TAG) under which objects are stored are known.

5. The method according to claim 4, **characterized in that** said session comprises a traffic case scope having a similar structure as said session scope and a traffic case record being referenced from said session record (SR) and said traffic case record being created to store references to executing objects of a call.

6. The method according to claim 5, **characterized in that** a transaction record (TR) is storing data objects belonging to said traffic case.

7. The method according to any of claim 6, **characterized in that** said tag element (TAG) is being realized by an integer number uniquely assigned to each executing object or data object used.

8. A multi-call processing switching system for telephony, preferably by way of software and/or hardware, creating a standard and generic structure, which makes it possible to extend said system with new services and data without effecting an already existing main operating hardware and software of the system using the half-call principle, **characterized in that** the system comprises means for performing a method comprising a session including a session controler (SC) handling said half-call, and creating a first entry port (PEP-B) to handle the protocol from a dialogue request and simultaneously also creating a second entry port (PEP-A) to handle a second dialogue request, whereby it is ensured that said second dialogue request being directed to said second entry port incorporated in said session will be capable to join an ongoing call if the party having the ongoing call accepts said second dialogue request.

9. The system according to claim 8, **characterized in that** said dialogue request is received by a setup server (SUS), which directs the request to said session.

10. The system according to claim 9, **characterized in that** said session uses a memory function in which different records are storing references in form of pointers to a local memory function, a pointer (PTR) being combined with a tag element (TAG) by means of which locally stored data will be uniquely identified.

11. The system according to claim 10, **characterized in that** said session uses a session record (SR) for storing references in form of pointers to executing objects and data objects of the call and from which record it will be possible to locate all other objects within the session, if tag elements (TAG) under which objects are stored are known.

12. The system according to claim 11, **characterized in that** said session comprises a traffic case scope having a similar structure as said session scope and a traffic case record being referenced from said session record (SR) and said traffic case record being created to store executing objects of a call.

13. The system according to claim 12, **characterized in that** a transaction record (TR) is adapted to store data objects belonging to said traffic case.

14. The system according to any one of claim 13, **characterized in that** said tag element (TAG) is being realized by an integer number uniquely assigned to each executing object or data object used.

## Patentansprüche

1. Verfahren zum Strukturieren von Mehrfachrufverarbeitung in einem Telekommunikationssystem, vorzugsweise mit Hilfe von Software, eine Standard- und generische Struktur kreierend, die es ermöglicht, das System auf neue Dienste und Daten zu erweitern, ohne Auswirkung auf eine bereits existierende Hauptbetriebs-Hardware und Software des Systems unter Verwendung des Halb-Rufprinzips, **dadurch gekennzeichnet, dass** das Verfahren eine Sitzung einschließlich eines Sitzungscontrollers (SC) umfasst zum Behandeln des Halb-Rufs, wobei ein erster Eingangsanschluss (PEP-B) gebildet wird zum Behandeln des Protokolls von einer Dialoganfrage und simultan auch ein zweiter Eingangsanschluss(PEP-A) gebildet wird zum Behandeln einer zweiten Dialoganfrage und wobei sichergestellt wird, dass die zweite Dialoganfrage, die an den zweiten in der Sitzung eingearbeiteten Eingangsport gerichtet ist, befähigt ist, sich einem eingerichteten Ruf anzuschließen, wenn der Teilnehmer mit dem eingerichteten Ruf die zweite Dialoganfrage akzeptiert.

2. Verfahren nach Anspruch 1, **dadurch gekennzeichnet, dass** die Dialoganfrage von einem Einrichtungsserver empfangen wird, welcher die Dialoganfrage zu der Sitzung richtet.

3. Verfahren nach Anspruch 2, **dadurch gekennzeichnet, dass** die Sitzung eine Speicherfunktion verwendet, in welcher unterschiedliche Datensätze Referenzen in Form von Zeigern zu einer lokalen Speicherfunktion speichern, wobei ein Zeiger (PTR) mit einem Etikettenelement (TAG) kombiniert ist, mit dessen Hilfe lokal gespeicherte Daten einzigartig identifiziert werden können.

4. Verfahren nach Anspruch 3, **dadurch gekennzeichnet, dass** die Sitzung einen Sitzungsdatensatz (SR) verwendet zum Speichern von Referenzen in Form von Zeigern zu ausführenden Objekten und zu Datenobjekten des Rufs und von welchem Datensatz es möglich sein wird, alle anderen Objekte innerhalb der Sitzung zu lokalisieren, wenn Etikettenelemente (TAG), unter welchen die Objekte gespeichert sind, bekannt sind.

5. Verfahren nach Anspruch 4, **dadurch gekennzeichnet, dass** die Sitzung einen Verkehrsfallbereich hat mit einer ähnlichen Struktur wie der Sitzungsbereich und auf einen Verkehrsfalldatensatz von dem Sitzungsdatensatz (SR) Bezug genommen wird und der Verkehrsfalldatensatz erstellt ist zum Speichern von Referenzen zu Ausführungsobjekten eines Rufs.

6. Verfahren nach Anspruch 5, **dadurch gekennzeichnet, dass** ein Transaktionsdatensatz (TR) Datenobjekte speichert, die zu dem Verkehrsfall gehören.

7. Verfahren nach einem der Ansprüche 6, **dadurch gekennzeichhet, dass** das Etikettenelement (TAG) realisiert wird durch eine einzigartig zugeordnete ganze Zahl zu jedem verwendeten Ausführungsobjekt oder Datenobjekt.

8. Mehrfachrufverarbeitungsvermittlungssystem für Telephonie, vorzugsweise mit Hilfe von Software und/oder Hardware, eine Standard- und generische Struktur kreierend, welche es ermöglicht, das System um neue Dienste und Daten zu erweitern ohne Auswirkung auf bereits existierende Hauptbetriebs-Hardware und Software des Systems unter Verwendung des Halb-Rufprinzips, **dadurch gekennzeichnet, dass** das System eine Vorrichtung umfasst zum Ausführen eines Verfahrens, das eine Sitzung umfasst, einschließlich eines Sitzungscontrollers (SC) zum Behandeln des Halb-Rufs, und Bilden eines ersten Eingangsanschlusses (PEP-B) zum Behandeln des Protokolls von einer Dialoganfrage und gleichzeitig auch Bilden eines zweiten Eingangsanschlusses (PEP-A) zum Behandeln einer zweiten Dialoganfrage, wobei sichergestellt wird, dass die zweite, zu dem zweiten in der Sitzung enthaltenen Eingangsanschluss gerichtete Dialoganfrage befähigt sein wird, sich einem eingerichteten Ruf anzuschließen, wenn der den eingerichteten Ruf innehabende Teilnehmer die zweite Dialoganfrage akzeptiert.

9. System nach Anspruch 8, **dadurch gekennzeichnet, dass** die Dialoganfrage von einem Einrichtungsserver (SUS). empfangen wird, welcher die Anfrage zu der Sitzung richtet.

10. System nach Anspruch 9, **dadurch gekennzeichnet, dass** die Sitzung eine Speicherfunktion verwendet, in welcher unterschiedliche Datensätze Bezugnahmen in Form von Zeigern zu einer lokalen Speicherfunktion speichern, wobei ein Zeiger (PTR) mit einem Etikettenelement (TAG) kombiniert ist, mit Hilfe von welchem lokal gespeicherte Daten einzigartig identifiziert werden können.

11. System nach Anspruch 10, **dadurch gekennzeichnet, dass** die Sitzung einen Sitzungsdatensatz (SR) verwendet zum Speichern von Bezugnahmen in Form von Zeigern zu ausführenden Objekten und zu Datenobjekten des Rufs und von welchem Datensatz es möglich sein wird, alle anderen Objekte innerhalb der Sitzung zu lokalisieren, wenn Etikettenelemente (TAG), unter welchen die Objekte gespeichert sind, bekannt sind.

12. System nach Anspruch 11, **dadurch gekennzeichnet, dass** die Sitzung einen Verkehrsfallbereich umfasst mit einer ähnlichen Struktur wie der Sitzungsfall, und auf einen Verkehrsfalldatensatz von dem Sitzungsdatensatz (SR) Bezug genommen wird und der Verkehrsfalldatensatz kreiert ist zum Speichern von Ausführungsobjekten eines Rufs.

13. System nach Anspruch 12, **dadurch gekennzeichnet, dass** ein Transaktionsdatensatz (TR) eingerichtet ist zum Speichern von Datenobjekten, die zu dem Verkehrsfall gehören.

14. Verfahren nach einem der Ansprüche 13, **dadurch gekennzeichnet, dass** das Etikettenelement (TAG) durch eine einzigartige, jedem verwendeten Ausführungsobjekt oder Datenobjekt zugeordnete ganze Zahl realisiert ist.

## Revendications

1. Procédé pour structurer un traitement d'appels multiples dans un système de télécommunication, de préférence au moyen d'un logiciel, en créant une structure standard et générique qui rend possible l'extension dudit système à de nouveaux services et à de nouvelles données sans affecter des matériels et des logiciels d'exploitation principaux existant déjà en utilisant le principe du demi-appel, **caractérisé en ce que** le procédé comprend une session comportant un contrôleur de session (SC) gérant ledit demi-appel, **caractérisé en ce qu'**un premier accès d'entrée (PEP-B) est créé pour gérer le protocole à partir d'une demande de dialogue et **en ce que**, simultanément, un second accès d'entrée (PEP-A) est également créé pour gérer une seconde demande de dialogue, et **en ce qu'**il est fait en sorte que ladite seconde demande de dialogue qui est dirigée vers ledit second accès d'entrée faisant partie de ladite session, est en mesure de participer à un appel en cours si le correspondant effectuant l'appel en cours accepte ladite seconde demande de dialogue.

2. Procédé selon la revendication 1, **caractérisé en ce que** ladite demande de dialogue est reçue par un serveur de configuration (SUS) qui dirige la demande de dialogue vers ladite session.

3. Procédé selon la revendication 2, **caractérisé en ce que** ladite session utilise une fonction de mémoire dans laquelle différents enregistrements stockent des références sous forme de pointeurs pointant sur une fonction locale, un pointeur (PTR) étant combiné à un élément de balise (TAG) au moyen duquel des données stockées localement seront identifiées de façon unique.

4. Procédé selon la revendication 3, **caractérisé en ce que** ladite session utilise un enregistrement de session (SR) pour stocker des références sous forme de pointeurs pointant sur des objets d'exécution et sur des objets de données de l'appel, enregistrement à partir duquel il sera possible de localiser tous les autres objets de la session si des éléments de balises (TAG) sous lesquels des objets sont enregistrés sont connus.

5. Procédé selon la revendication 4, **caractérisé en ce que** ladite session comprend une portée d'un cas de trafic ayant une structure semblable à ladite portée de session, et un enregistrement de cas de trafic auquel il est fait référence à partir dudit enregistrement de session (SR), ledit enregistrement de cas de trafic étant créé pour stocker des références à des objets d'exécution d'un appel.

6. Procédé selon la revendication 5, **caractérisé en ce qu'**un enregistrement de transaction (TR) stocke des objets de données appartenant audit cas de trafic.

7. Procédé selon la revendication 6 dans l'une quelconque de ses alternatives, **caractérisé en ce que** ledit élément de balise (TAG) est réalisé par un nombre entier affecté de façon unique à chaque objet d'éxécution ou objet de donnée utilisé.

8. Système de commutation de traitement d'appels multiples pour la téléphonie, de préférence sous forme logicielle et/ou matérielle, créant une structure standard et générique qui rend possible l'extension dudit système à de nouveaux services et de nouvelles données sans affecter des matériels et des logiciels d'exploitation principaux existant déjà en utilisant le principe du demi-appel, **caractérisé en ce que** le système comprend des moyens pour mettre en oeuvre un procédé comprenant une session comportant un contrôleur de session (SC) gérant ledit demi-appel, et créant un premier accès d'entrée (PEP-B) pour gérer le protocole à partir d'une demande de dialogue et créant également simultanément un second accès d'entrée (PEP-A) pour gérer une seconde demande de dialogue, **caractérisé en ce qu'**il est fait en sorte que ladite seconde demande de dialogue qui est dirigée vers ledit second accès d'entrée incorporée à ladite session, sera capable de se joindre à un appel en cours si le correspondant effectuant l'appel en cours accepte ladite seconde demande de dialogue.

9. Système selon la revendication 8, **caractérisé en ce que** ladite demande de dialogue est reçue par un serveur de configuration (SUS) qui dirige la demande de dialogue vers ladite session.

10. Système selon la revendication 9, **caractérisé en ce que** ladite session utilise une fonction de mémoire dans laquelle différents enregistrements stockent des références sous forme de pointeurs pointant sur une fonction de mémoire locale, un pointeur (PTR) étant combiné à un élément de balise (TAG) au moyen duquel des données stockées localement seront identifiées de façon unique.

11. Système selon la revendication 10, **caractérisé en ce que** ladite session utilise un enregistrement de session (SR) pour stocker des références sous forme de pointeurs pointant sur des objets d'exécution et sur des objets de données de l'appel, enregistrement à partir duquel il sera possible de localiser tous les autres objets de la session si des éléments de balises (TAG) sous lesquels des objets sont enregistrés sont connus.

12. Système selon la revendication 11, **caractérisé en ce que** ladite session comprend une portée d'un cas de trafic ayant une structure semblable à ladite portée de session et un enregistrement de cas de trafic auquel il est fait référence à partir dudit enregistrement de session (SR), ledit enregistrement de cas de trafic étant créé pour stocker des objets d'exécution d'un appel.

13. Système selon la revendication 12, **caractérisé en ce qu'**un enregistrement de transaction (TR) est apte à stocker des objets de données appartenant audit cas de trafic.

14. Système selon la revendication 13, **caractérisé en ce que** ledit élément de balise (TAG) est réalisé par un nombre entier affecté de façon unique à chaque objet d'exécution ou à chaque objet de donnée utilisé.
